# EUROPEAN PATENT APPLICATION

(11) **EP 3 614 711 A1**
(43) Date of publication of application: **26.02.2020**
(21) Application number: 19192865.4
(22) Date of filing: 21.08.2019
(51) Int. Cl.: H04W 12/06, H04W 12/04, H04L 29/08

(54) **METHOD FOR OUTPUTTING NETWORKING AUTHENTICATION INFORMATION, NETWORKING METHOD, APPARATUS AND STORAGE MEDIUM**

(30) Priority: 21.08.2018 CN 201810953209
(71) Applicant: Beijing Xiaomi Mobile Software Co., Ltd., Beijing 100085 (CN)
(72) Inventor: HUANGFU, Ping, Beijing, Beijing 100085 (CN)
(74) Representative: dompatent von Kreisler Selting Werner - Partnerschaft von Patent- und Rechtsanwälten mbB

(57) **Abstract**

The present disclosure relates to a method for outputting networking authentication information, a networking method, an apparatus and a storage medium. The method includes: obtaining networking authentication information; determining, based on a preset rule, a light emission control signal corresponding to the networking authentication information; and controlling, based on the light emission control signal, the first terminal to output an optical signal corresponding to the networking authentication information.

## Description

### TECHNICAL FIELD

The present disclosure relates to the field of communication technologies and, more particularly, to a method for outputting networking authentication information, a networking method, an apparatus and a storage medium.

### BACKGROUND

In the related art, a smart electronic device, such as a smart speaker, may not have an input component such as a touch screen or a keyboard. As a result, the smart electronic device needs to establish a communication connection, such as Bluetooth connection, with other devices when connecting to a network. The smart electronic device obtains networking authentication information from the device with which the communication connection is established, and then uses the networking authentication information for networking. Such operation is complicated.

### SUMMARY

In order to overcome the problem existing in the related art, the present disclosure provides a method for outputting networking authentication information, a networking method, an apparatus and a storage medium.

According to a first aspect of the present disclosure, there is provided a method for outputting networking authentication information. The method is applied to a first terminal, including: obtaining networking authentication information; determining, based on a preset rule, a light emission control signal corresponding to the networking authentication information; and controlling, based on the light emission control signal, the first terminal to output an optical signal corresponding to the networking authentication information.

In an embodiment, the controlling the first terminal to output the optical signal corresponding to the networking authentication information includes: controlling at least one of a screen or a flash of the first terminal to flicker to output the optical signal.

In an embodiment, the determining, based on the preset rule, the light emission control signal corresponding to the networking authentication information includes: converting a character in the networking authentication information into a corresponding light emission control signal by at least one of a Morse code rule or an American Standard Code for Information Interchange (ASCII) rule.

In an embodiment, the networking authentication information includes at least one of: a networking password; a networking service set identifier; or a running parameter.

According to a second aspect of the present disclosure, there is provided a networking method, applied to a second terminal, including: receiving an optical signal sent by a first terminal; determining, based on a preset rule, networking authentication information corresponding to the optical signal; and controlling the second terminal to perform an operation corresponding to the networking authentication information.

In an embodiment, the determining, based on the preset rule, the networking authentication information corresponding to the optical signal includes: converting the received optical signal into an electrical signal by a photoresistor on the second terminal; and determining, based on the preset rule, the networking authentication information corresponding to the electrical signal.

In an embodiment, the determining, based on the preset rule, the networking authentication information corresponding to the optical signal includes: converting the optical signal into the networking authentication information by at least one of a Morse code rule or an American Standard Code for Information Interchange (ASCII) rule.

In an embodiment, the networking authentication information includes at least one of: a networking password; a networking service set identifier; and a running parameter.

According to a third aspect of the present disclosure, there is provided a first terminal, including: a processor; and a memory storing instructions executable by the processor. The processor is configured to: obtain networking authentication information; determine, based on a preset rule, a light emission control signal corresponding to the networking authentication information; and control, based on the light emission control signal, the first terminal to output an optical signal corresponding to the networking authentication information.

In an embodiment, the processor is further configured to: control at least one of a screen or a flash of the first terminal to flicker to output the optical signal.

In an embodiment, the processor is further configured to: convert a character in the networking authentication information into a corresponding light emission control signal by at least one of a Morse code rule or an American Standard Code for Information Interchange (ASCII) rule.

In an embodiment, the networking authentication information includes a networking password, or a networking service set identifier and the networking password, or a running parameter.

According to a fourth aspect of the present disclosure, there is provided a second terminal, including: a processor; and a memory storing instructions executable by the processor. The processor is configured to: receive an optical signal sent by a first terminal; determine, based on a preset rule, networking authentication information corresponding to the optical signal; and control the second terminal to perform an operation corresponding to the networking authentication information.

In an embodiment, the processor is further configured to: convert the received optical signal into an electrical signal by a photoresistor on the second terminal; and determine, based on the preset rule, the networking authentication information corresponding to the electrical signal.

In an embodiment, the processor is further configured to: convert the optical signal into the networking authentication information by at least one of a Morse code rule or an American Standard Code for Information Interchange (ASCII) rule.

In an embodiment, the networking authentication information includes a networking password, or a networking service set identifier and a networking password, or a running parameter.

According to a fifth aspect of the present disclosure, there is provided a non-transitory computer-readable storage medium storing instructions that, when executed by a processor of a device, cause the device to perform the method according to the first aspect of the present disclosure.

According to a sixth aspect of the present disclosure, there is provided a non-transitory computer-readable storage medium storing instructions that, when executed by a processor of a device, cause the device to perform the method according to the second aspect of the present disclosure.

According to a seventh aspect of the present disclosure, there is provided an apparatus for outputting networking authentication information. The apparatus is applied to a first terminal, including: an obtaining module, configured to obtain networking authentication information; a first determination module, configured to determine, based on a preset rule, a light emission control signal corresponding to the networking authentication information; and a first control module, configured to control, based on the light emission control signal, the first terminal to output an optical signal corresponding to the networking authentication information.

According to an eighth aspect of the present disclosure, there is provided a networking apparatus applied to the second terminal, the apparatus including: a receiving module, configured to receive an optical signal sent by a first terminal; a second determination module, configured to determine, based on a preset rule, networking authentication information corresponding to the optical signal; and a second control module, configured to control the second terminal to perform an operation corresponding to the networking authentication information.

Through the method for outputting networking authentication information provided by the embodiments, the light emission control signal corresponding to the networking authentication information is determined based on the preset rule, and the first terminal is controlled to output the optical signal based on the light emission control signal; in this way, the networking authentication information is converted into the optical signal, thus the second terminal to be networked can learn the networking authentication information by identifying the optical signal, and then connect to the network by using the networking authentication information, which simplifies the networking process of the device and improves the networking efficiency.

It should be understood that the above general description and the detailed description below are merely exemplary and explanatory, and do not limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flow chart of a method for outputting networking authentication information according to an exemplary embodiment.
FIG. 2 is a flow chart of a method for outputting networking authentication information according to an exemplary embodiment.
FIG. 3 is a flow chart of a method for outputting networking authentication information according to an exemplary embodiment.
FIG. 4 is a flow chart of a networking method according to an exemplary embodiment.
FIG. 5 is a flow chart of a networking method according to an exemplary embodiment.
FIG. 6 is a flow chart of a networking method according to an exemplary embodiment.
FIG. 7 is a block diagram of an apparatus for outputting networking authentication information according to an exemplary embodiment.
FIG. 8 is a block diagram of a networking apparatus according to an exemplary embodiment.
FIG. 9 is a block diagram of a second determination module according to an exemplary embodiment.
FIG. 10 is a block diagram of an apparatus for outputting networking authentication information according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with some aspects related to the present disclosure as recited in the appended claims.

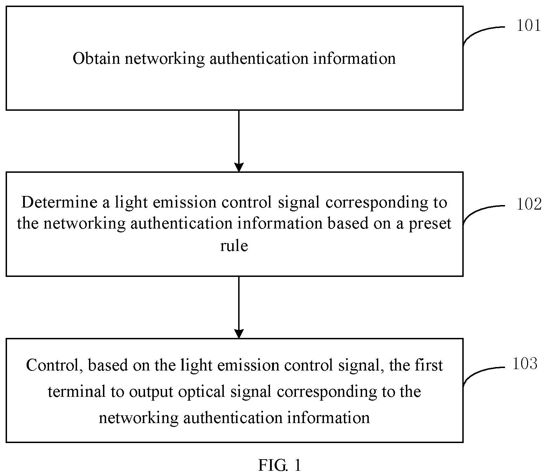

FIG. 1 is a flow chart of a method for outputting networking authentication information according to an exemplary embodiment. The method is applied to a first terminal. For example, the first terminal is a terminal that may provide networking authentication information. Referring to FIG. 1, the method includes the following steps.

In step 101, networking authentication information is obtained.

The networking involved in this embodiment may be a connection to any type of network, for example, the network may be a wireless network, such as WiFi. For example, the networking authentication information may include, e.g., a WiFi password entered by a user through the first terminal, or a WiFi account and a WiFi password entered by a user through the first terminal.

In step 102, a light emission control signal corresponding to the networking authentication information is determined based on a preset rule.

In one embodiment, the networking authentication information may include a character. A correspondence relationship between the light emission signal (also referred to as an optical signal) to be outputted by the first terminal and each character is pre-defined in the preset rule, for example, emitting light for a short period and then emitting light for a period of time corresponds to the character *a*, and emitting light for a period of time and then emitting light for a short period three times corresponds to the character *b.* Based on this, in step 102, the light emission signal corresponding to the networking authentication information may be determined based on the preset rule. The light emission signal may include at least one of: a short-time light emission, a period-of-time light emission, and a stop of light emission by a light emission component of the first terminal. Therefore, the light emission signal may also be referred to as a "flicker signal". Further, the light emission control signal, such as an electrical signal, required to cause the first terminal to output the light emission signal is determined. The light emission control signal is the light emission control signal corresponding to the networking authentication information, and the first terminal may control the light emission component to output the optical signal by the light emission control signal.

In step 103, based on the light emission control signal, the first terminal is controlled to output an optical signal corresponding to the networking authentication information.

In one embodiment, controlling the first terminal to output the optical signal corresponding to the networking authentication information may be controlling any one of the light emission components in the first terminal to output the optical signal corresponding to the networking authentication information.

Through the method for outputting networking authentication information provided by the embodiments, the light emission control signal corresponding to the networking authentication information is determined based on the preset rule, and the first terminal is controlled to output the optical signal based on the light emission control signal; in this way, the networking authentication information is converted into the optical signal, thus another terminal, referred to herein as the terminal to be networked, can learn the networking authentication information by identifying the optical signal, and then connect to the network by using the networking authentication information, which simplifies the networking process of the device and improves the networking efficiency.

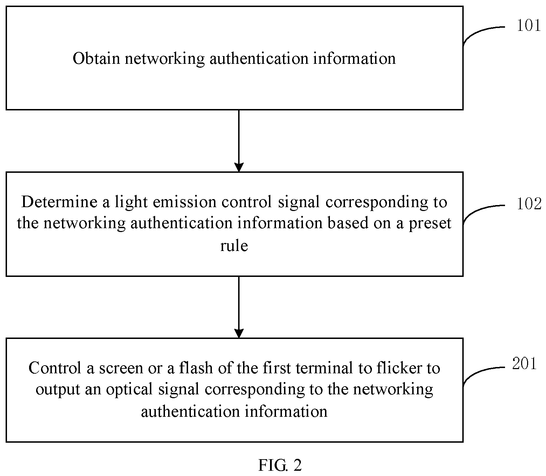

In one embodiment, the optical signal corresponding to the networking authentication information may be output by using an existing light emission component on the first terminal, for example, a screen or a flash of the first terminal, so that the method for outputting the networking authentication information of the present disclosure can be realized without modifying the first terminal. As shown in FIG. 2, in the method of this embodiment, the step of controlling the first terminal to output the optical signal corresponding to the networking authentication information may be implemented by step 201. In step 201, the screen and/or the flash of the first terminal is controlled to flicker to output the optical signal corresponding to the networking authentication information. For example, the screen and/or the flash of the first terminal is controlled to output the light emission signal based on the light emission control signal corresponding to the networking authentication information.

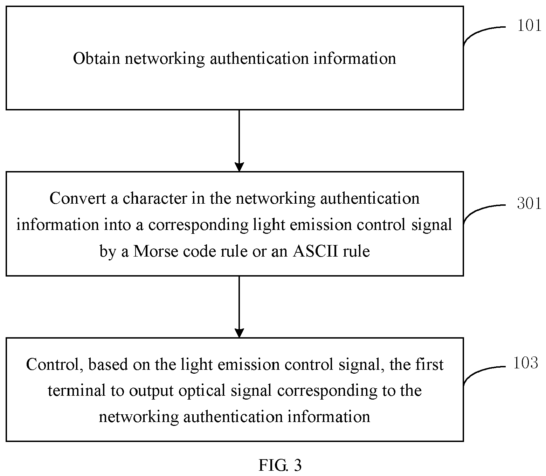

In one embodiment, the networking authentication information may include characters. As shown in FIG. 3, in the method of the embodiment, the step of determining the light emission control signal corresponding to the networking authentication information based on the preset rule may be implemented by step 301. In step 301, the characters in the networking authentication information are converted into corresponding light emission control signals by a Morse code rule or an American Standard Code for Information Interchange (ASCII) rule, wherein the converting the characters in the networking authentication information into the corresponding light emission control signals by the Morse code rule refers to the above-described conversion process of, e.g., the character *a* and the character *b.* For converting the characters in the networking authentication information into corresponding light emission control signals by the ASCII rule, different combinations of 0 and 1 may be used to correspond to different characters, and 0 and 1 in the characters may correspond to the short-time light emission and the period-of-time light emission, respectively. The networking authentication information can be converted into the light emission control signal quickly and conveniently by the Morse code rule or the ASCII rule, thereby controlling the first terminal to emit light, and improving the efficiency of the first terminal outputting the networking authentication information to the terminal to be networked.

In one embodiment, the networking authentication information may include at least one of a networking password, a networking service set identification and a running parameter. For example, the networking authentication information includes a networking password, or, the networking authentication information includes a networking service set identification and a networking password, or the networking authentication information includes a running parameter. When the networking authentication information includes only the networking password, the terminal to be networked may use the networking password to authenticate the searched network, and after the authentication is successful, the terminal can be connected to the network. When the networking authentication information includes the networking service set identification and the networking password, the terminal to be networked may directly use the networking service set identification and the networking password to connect to the network. When the networking authentication information includes the running parameter, the terminal to be networked may adjust its running state based on the running parameter. For example, the terminal to be networked is a water heater, and the running parameter is a target temperature for controlling the heating of the water heater, then after receiving the running parameter, the water heater performs a heating operation based on the running parameter.

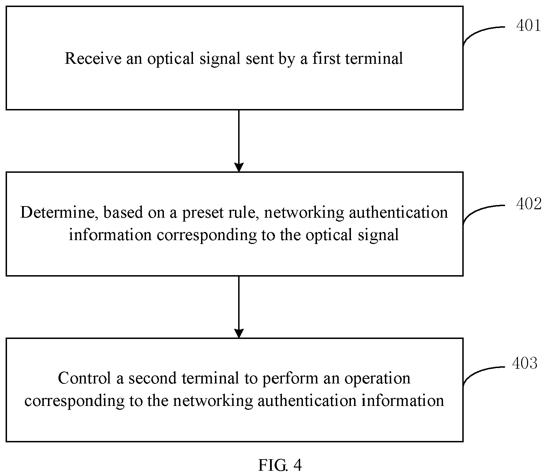

FIG. 4 is a flow chart of a networking method according to an exemplary embodiment. The method is applied to a second terminal, and the second terminal is a terminal to be networked, such as smart appliance, and the like. As shown in FIG. 4, the method includes the following steps.

In step 401, an optical signal sent by a first terminal is received.

In one embodiment, the optical signal sent by the first terminal may include at least one of: a short-time light emission, a period-of-time light emission, and a stop of light emission by the light emission component on the first terminal.

In step 402, based on a preset rule, networking authentication information corresponding to the optical signal is determined.

In one embodiment, the networking authentication information may include a character, and then corresponding one or more characters in the received optical signal may be identified based on the preset rule, thereby obtaining the networking authentication information.

In step 403, the second terminal is controlled to perform an operation corresponding to the networking authentication information.

In one embodiment, the second terminal is controlled to perform networking based on the networking authentication information.

In the networking method provided in this embodiment, the optical signal received by the second terminal are converted into the networking authentication information, based on the preset rule, and the corresponding operation is performed by using the networking authentication information, thereby simplifying the networking process of the terminal and improving the networking efficiency of the second terminal.

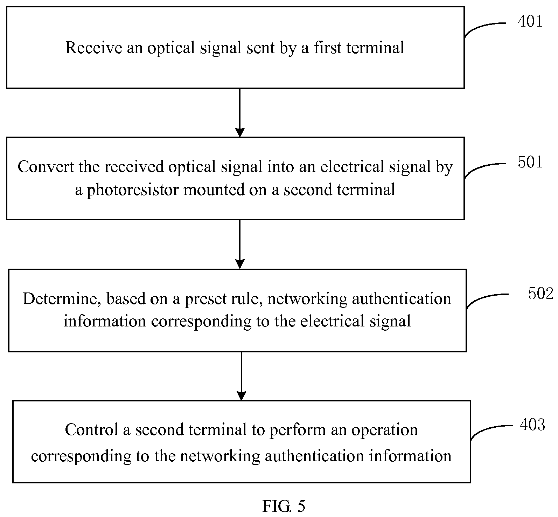

FIG. 5 is a flow chart of a networking method according to an exemplary embodiment. As shown in FIG. 5, the method for determining the networking authentication information corresponding to the optical signal based on the preset rule may be implemented by steps 501 and 502 on the basis of the method shown in FIG. 4. In step 501, the received optical signal is converted into an electrical signal by a photoresistor on the second terminal, and the electrical signal is an example of the above-described light emission control signal. In step 502, based on the preset rule, the networking authentication information corresponding to the electrical signal is determined. Based on the above, the networking authentication information can be obtained based on the light emission signal output by the first terminal by adding the photoresistor to the second terminal, so that the second terminal does not need to establish a communication connection with the first terminal, such as Bluetooth, to obtain the networking authentication information. This further simplifies the networking process.

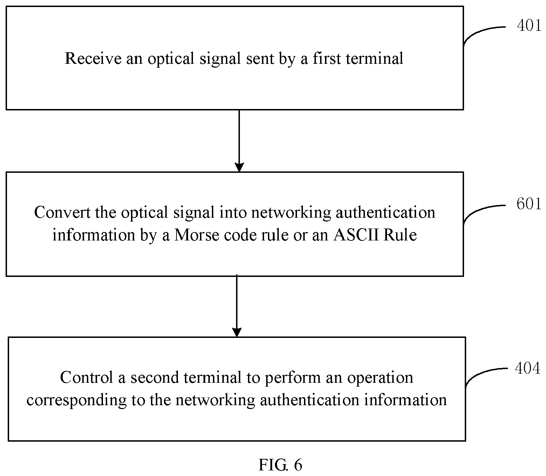

FIG. 6 is a flow chart of a networking method according to an exemplary embodiment. As shown in FIG. 6, the method for determining the networking authentication information corresponding to the optical signal based on a preset rule may be implemented by step 601 on the basis of the method shown in FIG. 4. In step 601, the optical signal is converted into the networking authentication information by a Morse code rule or an ASCII rule.

In one embodiment, the networking authentication information may include a networking password, or, the networking authentication information includes a networking service set identification and a networking password, or the networking authentication information includes a running parameter. When the networking authentication information includes only the networking password, the second terminal may use the networking password to authenticate the searched network. After the authentication is successful, the second terminal implements networking. When the networking authentication information includes the networking service set identifier and the networking password, the second terminal may directly use the networking service set identifier and the networking password for networking. When the networking authentication information includes the running parameter, the second terminal may adjust its running state based on the running parameter.

With respect to the apparatuses in the above embodiments, the specific manners for performing operations for individual modules therein have been described in detail in the embodiments regarding the methods, which will not be elaborated herein.

In an exemplary application scenario, when a user wants to connect a smart speaker to a network, the user may input a WiFi account and a WiFi password through a mobile phone, or use the pre-saved WiFi account and the WiFi password in the mobile phone, and trigger a function key for conversion. Then the WiFi account and the WiFi password are converted into a light emission control signal, and the light emission control signal may control the flicker of the screen or the flash of the mobile phone, and emit corresponding optical signals. The user may bring the mobile phone close to an area of the smart speaker where the photoresistor is located, and the photoresistor may convert the sensed optical signal into an electrical signal that carries the WiFi account and the WiFi password, thus the smart speaker may be networked by using the WiFi account and the WiFi password.

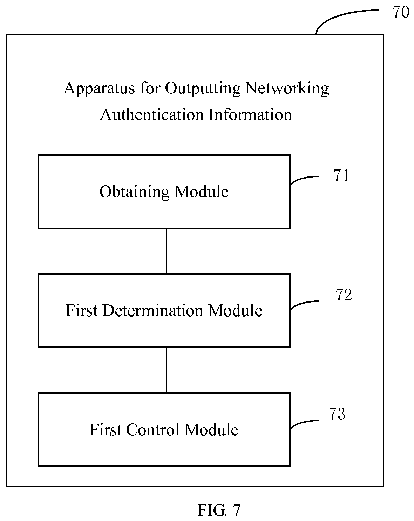

FIG. 7 is a block diagram of an apparatus 70 for outputting networking authentication information according to an exemplary embodiment. The apparatus 70 is applied to the first terminal. As shown in FIG. 7, the apparatus 70 may include an obtaining module 71, a first determination module 72 and a first control module 73.

The obtaining module 71 is configured to obtain networking authentication information.

The first determination module 72 is configured to determine, based on a preset rule, a light emission control signal corresponding to the networking authentication information.

The first control module 73 is configured to control, based on the light emission control signal, the first terminal to output an optical signal corresponding to the networking authentication information.

In one embodiment, the first control module 73 is configured to control a screen and/or a flash of the first terminal to flicker to output the optical signal.

In another embodiment, the first control module 73 is configured to convert a character in the networking authentication information into the corresponding light emission control signal by a Morse code rule or an American Standard Code for Information Interchange (ASCII) rule.

In one embodiment, the networking authentication information may include at least one of a networking password, a networking service set identification, or a running parameter. The networking authentication information may include a networking password, or, the networking authentication information may include a networking service set identification and the networking password, or the networking authentication information may include a running parameter.

The running parameter may be one of: a running parameter of the first terminal (referred to as a first sub-running parameter); or a running parameter required by the second terminal at a receiving end (referred to as a second sub-operation parameter). In the case that the running parameter is the first sub-running parameter, after receiving the parameter, the second terminal determines the running parameter required based on the received parameter. In the case that the running parameter is the second sub-operating parameter, after receiving the parameter, the second terminal operates based on the received second sub-operating parameter.

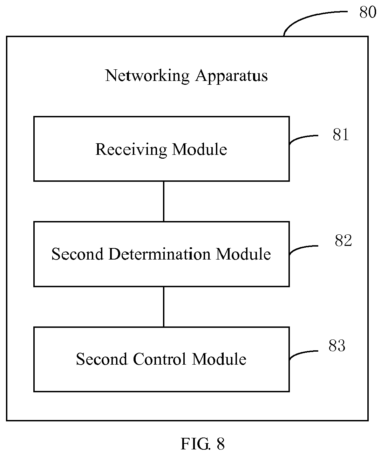

FIG. 8 is a block diagram of a networking apparatus 80 according to an exemplary embodiment. The apparatus 80 is applied to a second terminal. As shown in FIG. 8, the apparatus 80 may include a receiving module 81, a second determination module 82, and a second control module 83.

The receiving module 81 is configured to receive an optical signal sent by a first terminal.

The second determination module 82 is configured to determine, based on a preset rule, networking authentication information corresponding to the optical signal.

The second control module 83 is configured to control the second terminal to perform an operation corresponding to the networking authentication information.

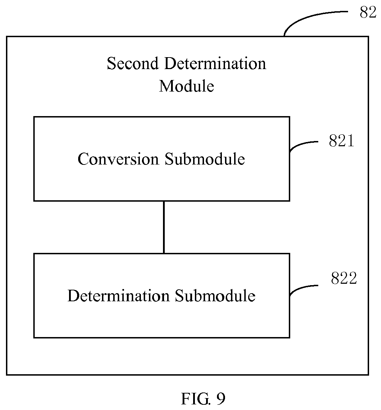

FIG. 9 is a block diagram of the second determination module 82 (FIG. 8) according to an exemplary embodiment. As shown in FIG. 9, the second determination module 82 includes: a conversion submodule 821, configured to convert a received optical signal into an electrical signal by a photoresistor on the second terminal; and a determination submodule 822, configured to determine, based on the preset rule, the networking authentication information corresponding to the electrical signal.

In one embodiment, the second determination module 82 may be configured to convert the optical signal into networking authentication information by a Morse code rule or an ASCII rule.

In one embodiment, the networking authentication information may include a networking password, or, the networking authentication information may include a networking service set identification and a networking password, or the networking authentication information may include an operating parameter.

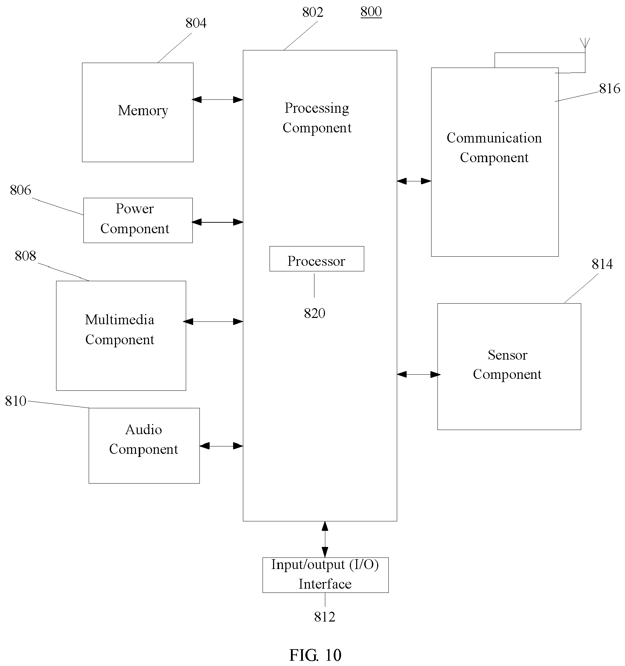

FIG. 10 is a block diagram of an apparatus 800 for outputting networking authentication information according to an exemplary embodiment. The apparatus 800 may be provided as the above apparatus for outputting networking authentication information, or provided as the above-mentioned networking apparatus. For example, the apparatus 800 may be a mobile phone, a computer, a digital broadcast terminal, a messaging device, a game console, a tablet, a medical device, exercise equipment, a personal digital assistant, and the like.

Referring to FIG. 10, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any application or method operated on the apparatus 800, contact data, phonebook data, messages, pictures, videos, etc. The memory 804 may be implemented using any type of volatile or non-volatile storage devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 4G, or 5G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the apparatus 800, for performing the above-described methods. For example, the non-transitory computer-readable storage medium may be a ROM, a RAM, a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the present disclosure as come within known or customary practice in the art. It is intended that the specification and examples be considered as exemplary only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for outputting networking authentication information, applied to a first terminal, the method comprising:
obtaining networking authentication information;
determining, based on a preset rule, a light emission control signal corresponding to the networking authentication information; and
controlling, based on the light emission control signal, the first terminal to output an optical signal corresponding to the networking authentication information.

2. The method according to claim 1, wherein the controlling the first terminal to output the optical signal corresponding to the networking authentication information comprises:
controlling at least one of a screen or a flash of the first terminal to flicker to output the optical signal.

3. The method according to claim 1, wherein the determining, based on the preset rule, the light emission control signal corresponding to the networking authentication information comprises:
converting a character in the networking authentication information into a corresponding light emission control signal by at least one of a Morse code rule or an American Standard Code for Information Interchange (ASCII) rule.

4. The method according to any one of claims 1-3, wherein the networking authentication information comprises at least one of:
a networking password; a networking service set identifier; or a running parameter.

5. A networking method, applied to a second terminal, the method comprising:
receiving an optical signal sent by a first terminal;
determining, based on a preset rule, networking authentication information corresponding to the optical signal; and
controlling the second terminal to perform an operation corresponding to the networking authentication information.

6. The method according to claim 5, wherein the determining, based on the preset rule, the networking authentication information corresponding to the optical signal comprises:
converting the received optical signal into an electrical signal by a photoresistor on the second terminal; and
determining, based on the preset rule, the networking authentication information corresponding to the electrical signal.

7. The method according to claim 5 or 6, wherein the determining, based on the preset rule, the networking authentication information corresponding to the optical signal comprises:
converting the optical signal into the networking authentication information by at least one of a Morse code rule or an American Standard Code for Information Interchange (ASCII) rule.

8. The method according to claim 5 or 6, wherein the networking authentication information comprises at least one of:
a networking password; a networking service set identifier; and a running parameter.

9. A first terminal, comprising:
a processor; and
a memory storing instructions executable by the processor,
wherein the processor is configured to perform the method for outputting networking authentication information according to any of claims 1-4.

10. A second terminal, comprising:
a processor; and
a memory storing instructions executable by the processor,
wherein the processor is configured to perform the networking method according to any of claims 5-8.

11. A non-transitory computer-readable storage medium storing instructions that, when executed by a processor of a device, cause the device to perform the method according to any of claims 1-4.

12. A non-transitory computer-readable storage medium storing instructions that, when executed by a processor of a device, cause the device to perform the method according to any of claims 5-8.
